# EUROPÄISCHE PATENTSCHRIFT

(11) **EP 2 080 988 B1**
(45) Veröffentlichungstag und Bekanntmachung des Hinweises auf die Patenterteilung: **04.01.2012**
(21) Anmeldenummer: 08000961.6
(22) Anmeldetag: 18.01.2008
(51) Int. Cl.: G01D 3/08, G01D 5/245

(54) **Messsystem und Verfahren zur Überwachung des Messsystems**
Measurement system and device for surveillance of a measuring system
Système de mesure et procédé de surveillance du système de mesure

(43) Veröffentlichungstag der Anmeldung: 22.07.2009
(73) Patentinhaber: SIEMENS AKTIENGESELLSCHAFT, 80333 München (DE)
(72) Erfinder: Finkler, Roland, Dr., 91058 Erlangen (DE)

(56) Entgegenhaltungen:
- EP-A- 0 431 195
- EP-A- 1 205 728
- JP-A- 63 300 911
- JP-A- 2007 292 691

## Beschreibung

Die Erfindung betrifft ein Verfahren zur Überwachung eines Messsystems, wobei das Messsystem einen Geber zur Ermittelung der Lage eines bewegbaren Elements aufweist.

Weiterhin betrifft die Erfindung ein diesbezügliches Messsystem.

Insbesondere auf dem technischen Gebiet der Automatisierungstechnik wird zur Ermittlung einer Lage eines bewegbaren Elements, wie z.B. einer Motorwelle eines Antriebs zum Antreiben einer Maschinenachse, Messsysteme, insbesondere inkrementellen Messsysteme eingesetzt. Mittels eines inkrementellen Messsystems bei der der Geber eine Referenzmarke aufweist, kann nach dem Überfahren der Referenzmarke die absolute Lage ermittelt werden, in dem nach dem Überfahren der Referenzmarke (Lage Null) die überfahrenen Inkremente lückenlos mittels eines Zählers mitgezählt werden. Der Zählerstand der überfahrenen Inkremente entspricht dabei einer Groblage, wobei im Weiteren durch Interpolation, wie z.B. in der DE 27 29 697 A1 beschrieben, eine Feinlage ermitteln wird. Groblage und Feinlage zusammen ergeben die Absolutlage.

Insbesondere bei Werkzeugmaschinen, Produktionsmaschinen und/oder bei Robotern werden solche Messsysteme üblicherweise von einer Steuer- und/oder Regeleinrichtung, die zur Steuerung und/oder Regelung von bewegbaren Elementen der Maschine dient, im Normalbetrieb mit elektrischer Energie versorgt. Wird die Steuer- und/oder Regeleinrichtung ausgeschaltet, dann ist es bei vielen derartigen Messsystemen so, dass der Zählerstand für die überfahrenen Inkremente verloren geht und/oder nach dem Ausschalten überfahrene Inkremente nicht mehr mitgezählt werden. Nach dem Wiedereinschalten der Steuer- und/oder Regeleinrichtung muss bei solchen Messsystemen zunächst erst wieder die Referenzmarke überfahren werden, um die Absolutlage bestimmen zu können.

Nach dem Stand der Technik kann dieses Problem jedoch gelöst werden, in dem man eine Batterie vorsieht, die das Messsystem auch nach dem Ausschalten der Steuer- und/oder Regeleinrichtung versorgt. Ein solches Messsystem ist z.B. in der EP 0 362 407 A1 beschrieben. Dabei werden z.B. nicht alle elektrischen Bestandteile des Gebers mit Energie versorgt, sondern es wird nur ein Teil des Gebers mit elektrischer Energie versorgt. Der Geber wird solchermaßen in einem energiesparenderen Modus als im Normalbetrieb betrieben. Eventuell wird z.B. nur ein einzelnes RAM zur Speicherung des Zählerstandes versorgt (dann können allerdings etwaige Bewegungen des bewegbaren Elements bei ausgeschalteter Steuer- und/oder Regeleinrichtung nicht erfasst werden). Eventuell wird auch z.B. eine sonst kontinuierlich betriebene Leuchtdiode eines optischen Gebers nur gepulst betrieben und die Interpolationselektronik gar nicht betrieben, so dass die Feinlage gar nicht mehr oder nicht mehr so gut erfasst wird, wie sonst üblich aber immer noch ausreichend um die überfahrenen Inkremente zu zählen. Weiterhin sind Geber z.B. aus der DE 35 86 937 T2 und der EP 0 158 781 A1 bekannt.

Nachteilig bei diesem Stand der Technik ist, dass bei ungenügender Energieversorgung bei Ausfall der Batterie, der Zählerstand der überfahrenen Elemente gelöscht oder verändert werden kann. Dies kann insbesondere bei einem zu langen Ausfall der externen Energieversorgung des Gebers, welche im Normalbetrieb die Energieversorgung des Gebers sicherstellt, auftreten. Nach einem Wiederzuschalten der Steuerungs- und/oder Regeleinrichtung und damit nach Wiederherstellung der externen elektrischen Versorgungsspannung für den Normalbetrieb des Gebers ist dann nicht mehr sichergestellt, dass die vom Geber ermittelte Lage noch tatsächlich mit der wirklichen Lage des bewegbaren Elements übereinstimmt, weil zwischenzeitlich die von der Batterie erzeugte Hilfsversorgungsspannung zu weit abgesunken ist um zumindest die wichtigen elektrischen Bauteile des Gebers ausreichend mit Energie zu versorgen.

Ferner ist aus der DE 20 2004 000 413 U1 ein Geber bekannt, bei dem ein nichtflüchtiger Speicher zur Speicherung des Zählerstandes verwendet wird, wobei als unabhängige Energiequelle ein elektromechanischer Schnappmechanismus dient. Hierbei ist unter anderem die relativ aufwändige Mechanik nachteilig.

Der Erfindung liegt die Aufgabe zugrunde eine, aufgrund eines Ausfalls der elektrischen Energieversorgung des Gebers herrührende, fehlerhaft ermittelte Lage zu erkennen.

Diese Aufgabe wird gelöst durch ein Verfahren zur Überwachung eines Messsystems, wobei das Messsystem einen Geber zur Ermittelung der Lage eines bewegbaren Elements aufweist, dadurch gekennzeichnet, dass der Geber eine Geberuhr aufweist, wobei das Messsystem einen elektrischen Energiespeicher aufweist, der bei Ausfall einer externen elektrischen Versorgungsspannung des Gebers zumindest ein Teil des Gebers einschließlich der Geberuhr weiter mit elektrischer Energie versorgt, wobei nach Wiederherstellung der externen elektrischen Versorgungsspannung ein Vergleich der Urzeit der Geberuhr mit einer Uhrzeit einer externen Uhr durchgeführt wird und anhand des Vergleichs der Uhrzeiten eine fehlerhaft ermittelte Lage erkannt wird.

Weiterhin wird diese Aufgabe gelöst durch ein Messsystem, wobei das Messsystem einen Geber zur Ermittelung der Lage eines bewegbaren Elements aufweist, wobei der Geber eine Geberuhr aufweist, wobei das Messsystem einen elektrischen Energiespeicher aufweist, der bei Ausfall einer externen elektrischen Versorgungsspannung des Gebers zumindest ein Teil des Gebers einschließlich der Geberuhr weiter mit elektrischer Energie versorgt, wobei das Messsystem eine Überwachungseinheit aufweist, wobei die Überwachungseinheit nach Wiederherstellung der externen elektrischen Versorgungsspannung ein Vergleich der Urzeit der Geberuhr mit einer Uhrzeit einer externen Uhr durchführt und anhand des Vergleichs der Uhrzeiten eine fehlerhaft ermittelte Lage erkennt.

Vorteilhafte Ausbildungen der Erfindung ergeben sich aus den abhängigen Ansprüchen.

Vorteilhafte Ausbildungen des Verfahrens ergeben sich analog zu vorteilhaften Ausbildungen des Messsystems und umgekehrt.

Es erweist sich als vorteilhaft, wenn der Vergleich der Uhrzeiten durchgeführt wird, indem eine erste Differenz von Uhrzeit der Geberuhr und Uhrzeit der externen Uhr beim erstmaligen Detektieren einer Referenzmarke des Gebers ermittelt wird und nach Wiederherstellung der externen elektrischen Versorgungsspannung eine zweite Differenz von Uhrzeit der Geberuhr und Uhrzeit der externen Uhr ermittelt wird und die erste Differenz mit der zweiten Differenz verglichen wird. Durch diese Maßnahme wird gewährleistet, dass ein Vergleich der Uhrzeiten durchgeführt werden kann, ohne dass dazu die Uhrzeiten übereinstimmen müssen. Durch diese Maßnahme entfällt eine notwendige Synchronisation der Uhrzeit von Geberuhr und Uhrzeit der externen Uhr. Weiterhin wird durch diese Maßnahme sichergestellt, dass erst beim erstmaligen Detektieren einer Referenzmarke durch die Sensorik auf eine richtig ermittelte Lage erkannt werden kann. Solchermaßen ist sichergestellt, dass die ermittelte Lage prinzipiell als fehlerhaft erkannt wird, solange noch keine Absolutlage fest steht. Vorzugsweise wird dabei vor Ermitteln der ersten Differenz die Uhrzeit der Geberuhr auf einen geeigneten Wert gesetzt.

Ferner erweist es sich als vorteilhaft, wenn die erste Differenz mit der zweiten Differenz verglichen wird, indem die Differenz von erster Differenz der zweiten Differenz gebildet wird. Dies stellt eine besonders einfache Möglichkeit des Vergleichs dar.

Weiterhin erweist es sich als vorteilhaft, wenn bei Ausfall der externen Versorgungsspannung des Gebers zumindest ein Teil des Gebers von dem Energiespeicher zusätzlich derart mit elektrischer Energie versorgt wird, dass überfahrene Inkremente gezählt werden, da dann auch im Falle einer Bewegung des bewegbaren Elements während eines Ausfalls der Versorgungsspannung der Zählerstand korrekt ist.

Ferner erweist es sich als vorteilhaft, wenn die externe Uhr Bestandteil einer Steuer- und/oder Regeleinrichtung zur Steuerung und/oder Regelung eines bewegbaren Elements ist. Hierdurch kann auf eine zusätzliche Hardware zur Realisierung der Überwachungseinheit verzichtet werden.

Weiterhin erweist es sich als vorteilhaft, eine Werkzeugmaschine, Produktionsmaschine und/oder einen Roboter mit dem erfindungsgemäßen Messsystem auszubilden.

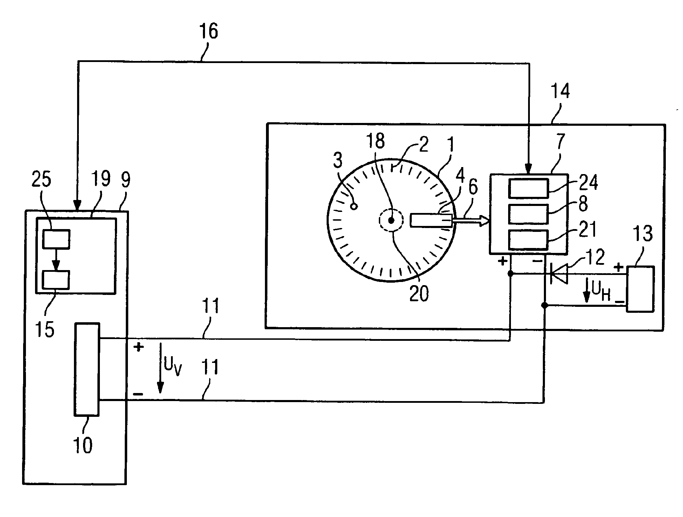

Ein Ausführungsbeispiel der Erfindung ist in der Zeichnung dargestellt und wird im Folgenden näher erläutert. Dabei zeigt die Figur ein erfindungsgemäßes Messsystem.

In der Figur ist in Form einer schematisierten Darstellung das erfindungsgemäße Messsystem dargestellt, wobei der Übersichtlichkeit halber nur die zum Verständnis der Erfindung notwendigen Elemente dargestellt sind. Ein Geber 14 weist dabei eine Scheibe 1 auf, deren Drehachse 18 mit einem bewegbaren Element, dass im Rahmen des Ausführungsbeispiels in Form einer Motorwelle 20 vorliegt, verbunden ist. Der Geber 14 misst solchermaßen die Lage, d.h. im Rahmen des Ausführungsbeispiels den Drehwinkel der Motorwelle 20. Der Geber 14 weist hierzu eine Inkrementalspur auf, die sich aus kreisförmig angeordneten Inkrementen zusammensetzt. In Figur ist beispielhaft ein Inkrement mit dem Bezugszeichen 2 versehen. Die Scheibe 1 ist weiterhin mit einer Referenzmarke 3 versehen. Mittels einer Sensorik 4 wird bei einer Drehbewegung der Scheibe 1 ein Durchlaufen der Referenzmarke 3 sowie das Durchlaufen der Inkremente registriert und an eine Auswerteeinheit 7 übertragen, was durch einen Pfeil 6 angedeutet ist. Die durchlaufenden Inkremente werden von einem Zähler 21 gezählt und der Zählerstand in einem Speicher 8 abgelegt. Anhand des Zählerstandes kann dann die Lage der Motorwelle 20 bestimmt werden und z.B. über eine Verbindung 16 an eine Steuer- und/oder Regeleinrichtung 9, die zur Steuer- und /oder Regelung der Lage des bewegbaren Elements dient, übermittelt werden.

Zur Energieversorgung im Normalbetrieb des Gebers weist das Messsystem eine Spannungserzeugungseinrichtung 10 auf, die zur Energieversorgung des Gebers 14 eine externe elektrische Versorgungsspannung Uᵥ erzeugt und über Spannungsversorgungsleitungen 11 den Geber 14 von extern mit Energie versorgt. Die Spannungsversorgungseinrichtung 10 ist im Rahmen des Ausführungsbeispiels Bestandteil der Steuer- und/oder Regeleinrichtung 9. Dies muss jedoch nicht notwendigerweise so sein, sondern die Spannungserzeugungseinrichtung 10 kann auch unabhängig von der Steuer- und/oder Regeleinrichtung 9 außerhalb der Steuer- und/oder Regeleinrichtung 9 angeordnet sein.

Weiterhin weist der Geber 14 einen Energiespeicher 13 auf, der z.B. in Form einer Batterie oder eines Kondensators oder eine Kombination von beiden, ausgebildet sein. Der Energiespeicher 13 erzeugt eine Hilfsversorgungsspannung U_{H}. Bei Ausfall der externen elektrischen Versorgungsspannung Uᵥ wird durch den Energiespeicher 13 über einen gewissen Zeitraum zumindest einen Teil des Gebers derart mit elektrischer Energie versorgt, dass der gespeicherte Zählerstand des Gebers im Speicher 8, erhalten bleibt. Der Energiespeicher 13 ist dabei über eine Entkopplungsdiode 12 von der Spannungserzeugungseinrichtung 10 elektrisch entkoppelt. Bei Ausfall der externen Versorgungsspannung Uᵥ liegt unter Vernachlässigung des Spannungsabfalls an der Entkopplungsdiode 12 die Hilfsversorgungsspannung U_{H} an den versorgungsleitungen 11 an.

Wenn die Spannungserzeugungseinrichtung 10 für längere Zeit ausfällt oder abgeschaltet ist und der Energiespeicher 14 sich infolge zunehmend entleert sinkt die Hilfsversorgungsspannung U_{H} mit der Zeit ab. Wenn die Hilfsversorgungsspannung unter einen kritischen Wert abgesunken ist, geht der Zählerstand im Speicher 8 verloren, d.h. er wird gelöscht oder verändert. Dies hat eine fehlerhaft ermittelte Lage zur Folge, was von der Steuer- und/oder Regeleinrichtung 9 bei handelsüblichen Messsystemen nicht bemerkt wird. Dies kann zu einer fehlerhaften Steuerung und/oder Regelung der Bewegung des bewegbaren Elements führen.

Erfindungsgemäß weist der Geber 14 eine Uhr 24 auf, die nachfolgend als Geberuhr bezeichnet wird. Die Geberuhr 24 kann z.B. als Quarzuhr realisiert sein. Die Steuerung- und/oder Regeleinrichtung 9 ist über eine Verbindung 16 mit dem Geber 14 zum Austausch von Daten verbunden. Der Geber übermittelt z.B. seine ermittelte Lage über die Verbindung 16 an die Steuerung- und/oder Regeleinrichtung 9. Die Steuer- und/oder Regeleinrichtung 9 dient wie schon gesagt zur Steuerung und/oder Regelung des bewegbaren Elements, das im Rahmen des Ausführungsbeispiels z.B. als Motorwelle 20 ausgebildet ist. Die Steuerung- und/oder Regeleinrichtung 9 weist hierzu eine Recheneinrichtung 19 auf, die mit Hilfe der vom Geber 14 ermittelten Lage einen Motor entsprechend steuert und/oder regelt. Die Steuerung- und/oder Regeleinrichtung 9 weist ferner eine Uhr 25 auf, die nachfolgend als externe Uhr bezeichnet wird, wobei der Begriff extern zum Ausdruck bringt, dass diese nicht Bestandteil des Gebers ist. Die externe Uhr 25 braucht aber nicht notwendigerweise, wie im Ausführungsbeispiel Bestandteil der Recheneinrichtung 19 zu sein. Weiterhin weist die Steuer- und/oder Regeleinrichtung 9 eine Überwachungseinheit 15, die im Rahmen des Ausführungsbeispiels in Form von Software, die auf der Recheneinrichtung 19 ausgeführt wird, ausgebildet ist. Die Überwachungseinheit kann aber auch in Form von Hardware außerhalb der Recheneinrichtung 19 ausgebildet sein. Die Recheneinrichtung 19 kann z.B. in Form einer numerischen Steuerung (NC-Steuerung) einer Maschine ausgebildet sein.

Fällt die von der Spannungserzeugniseinrichtung 10 erzeugte externe elektrische Versorgungsspannung Uᵥ aus, weil z.B. die Steuer- und/oder Regeleinrichtung 9 ausgeschaltet wird, dann wird die elektrische Spannungsversorgung des Gebers 14 noch über einen bestimmten Zeitraum vom elektrischen Energiespeicher 13, der die Hilfsversorgungsspannung U_{H} erzeugt, und z.B. in Form einer Batterie oder in Form eines Kondensators vorliegen kann, aufrecht erhalten. Die Entkopplungsdiode 12 dient dabei zum Entkoppeln der externen elektrischen Versorgungsspannung Uᵥ von der Hilfsversorgungsspannung U_{H}. Der Energiespeicher 13 braucht dabei nicht unbedingt alle elektrischen Elemente des Gebers weiter mit elektrischer Energie zu versorgen, er muss jedoch mindestens den Speicher 8, welcher den Zählerstand speichert und die Geberuhr 24 weiter mit Energie versorgen. Fällt die externe elektrische Versorgungsspannung Uᵥ jedoch zulange aus, dann sinkt ab einem bestimmten Zeitpunkt die Hilfsversorgungsspannung U_{H} unter einen kritischen Wert ab, der nicht mehr zu einer ausreichenden Energieversorgung des Speichers 8 und der Geberuhr 24 ausreicht. Die von der Geberuhr 24 ermittelte Uhrzeit wird in Folge hierdurch gelöscht oder zumindest verändert und der Zählerstand im Speicher 8 wird ebenfalls gelöscht oder zumindest verändert. Die vom Geber 14 ermittelte Lage ist somit fehlerhaft.

Nachdem die Steuer- und/oder Regeleinrichtung 9 zu irgend einem späteren Zeitpunkt wieder eingeschaltet wird, und somit über die Spannungserzeugungseinrichtung 10 der Geber 14 wieder mit elektrischer Energie versorgt wird, übermittelt der Geber über die Verbindung 16 die nun fehlerhaft ermittelte Lage und die Uhrzeit der Geberuhr 24 an die Steuer- und/oder Regeleinrichtung 9 und insbesondere an die Überwachungseinheit 15. Die Überwachungseinheit 15 vergleicht die Uhrzeit der externen Uhr 25 mit der Uhrzeit der Geberuhr 24 und stellt anhand dieses Vergleichs fest, ob die ermittelte Lage fehlerhaft ist oder gültig ist.

Im einfachsten Fall erfolgt der Vergleich durch z.B. Ermittlung einer Differenz von Uhrzeit der externen Uhr 25 und Uhrzeit der Geberuhr 24 und sobald der Betrag der solchermaßen ermittelten Differenz einen bestimmten Grenzwert überschreitet, wird auf eine fehlerhaft ermittelte Lage erkannt. Der Grenzwert hängt dabei von der Genauigkeit von Geberuhr 24 und der externer Uhr 25 ab. Nachteilig bei einer solchen Auswertung ist, dass die Geberuhr 24 keinen zeitlichen Versatz (Zeitdifferenz) zur externen Uhr 25 aufweisen darf.

Dieser Nachteil kann durch die eine geschickte vorteilhafte Auswertung der beiden Uhrzeiten in der Überwachungseinheit 15 überwunden werden. Wenn der Vergleich der Uhrzeiten durchgeführt wird, indem bei bestehender externer elektrischer Versorgungsspannung, beim erstmaligen Detektieren einer Referenzmarke des Gebers eine erste Differenz von Uhrzeit der Geberuhr 24 und von der Uhrzeit der externen Uhr 25 in der Überwachungseinheit 15 ermittelt und gespeichert wird und nach einem Ausfall der extern elektrischen Versorgungsspannung Uᵥ und anschließender Wiederherstellung der extern elektrischen Versorgungsspannung Uᵥ eine zweite Differenz von Uhrzeit der Geberuhr 24 und Uhrzeit der externen Uhr 25 ermittelt wird und die erste Differenz mit der zweiten Differenz in der Überwachungseinheit 15 verglichen wird.

Im einfachsten Fall wird dabei die erste Differenz mit der zweiten Differenz verglichen, in dem die Differenz von erster Differenz und zweiter Differenz gebildet wird. Überschreitet der Betrag der Differenz von erster Differenz und zweiter Differenz einen voreingestellten Grenzwert, dann wird auf eine fehlerhaft ermittelte Lage erkannt.

Das erstmalige Detektieren der Referenzmarke kann z.B. bei einer erstmaligen Inbetriebnahme des Messsystems nach Lieferung und Aufstellung der Maschine erfolgen.

Es sei an dieser Stelle angemerkt, dass in der Figur nur die zum Verständnis wesentlichen Elemente des Gebers 14 dargestellt sind. Der Geber 14 kann z.B. auch über mehrere Inkrementalspuren verfügen und/oder über mehrere Sensoriken 4 zur Erfassung z.B. einer Feinlage (Sinus/Cosinus Spursignale), sowie über mehrere Zähler und mehrere Zählerstände zur Erfassung der laufenden Inkremente. Der Energiespeicher 13 versorgt dann entsprechend den Speicher 8 derart, dass die einzelnen Zählerstände bei Ausfall der externen Energieversorgungsspannung erhalten bleiben.

Weiterhin sei an dieser Stelle angemerkt, dass der Energiespeicher 13 auch außerhalb des Gebers 14 angeordnet sein kann.

## Patentansprüche

1. Verfahren zur Überwachung eines Messsystems, wobei das Messsystem einen Geber (14) zur Ermittelung der Lage eines bewegbaren Elements (20) aufweist, **dadurch gekennzeichnet, dass** der Geber (14) eine Geberuhr (24) aufweist, wobei das Messsystem einen elektrischen Energiespeicher (13) aufweist, der bei Ausfall einer externen elektrischen Versorgungsspannung (Uᵥ) des Gebers (14) zumindest ein Teil des Gebers einschließlich der Geberuhr (24) weiter mit elektrischer Energie versorgt, wobei nach Wiederherstellung der externen elektrischen Versorgungsspannung (Uᵥ) ein Vergleich der Urzeit der Geberuhr (24) mit einer Uhrzeit einer externen Uhr (25) durchgeführt wird und anhand des Vergleichs der Uhrzeiten eine fehlerhaft ermittelte Lage des bewegbaren Elements (20) erkannt wird.

2. Verfahren nach Anspruch 1, in welchem der Vergleich der Uhrzeiten durchgeführt wird, indem eine erste Differenz von Uhrzeit der Geberuhr (24) und Uhrzeit der externen Uhr (25) beim erstmaligen Detektieren einer Referenzmarke (3) des Gebers (14) ermittelt wird und nach Wiederherstellung der externen elektrischen Versorgungsspannung (Uᵥ) eine zweite Differenz von Uhrzeit der Geberuhr (24) und Uhrzeit der externen Uhr (25) ermittelt wird und die erste Differenz mit der zweiten Differenz verglichen wird.

3. Verfahren nach Anspruch 2, in welchem die erste Differenz mit der zweiten Differenz verglichen wird, indem die Differenz von erster Differenz und zweiter Differenz gebildet wird.

4. Verfahren nach einem der vorherigen Ansprüche, in welchem bei Ausfall der externen Versorgungsspannung (Uᵥ) des Gebers (14) zumindest ein Teil des Gebers (14) von dem Energiespeicher (13) zusätzlich derart mit elektrischer Energie versorgt wird, dass überfahrene Inkremente gezählt werden.

5. Messsystem, wobei das Messsystem einen Geber (14) zur Ermittelung der Lage eines bewegbaren Elements (20) aufweist, **dadurch gekennzeichnet, dass** der Geber (14) eine Geberuhr (24) aufweist, wobei das Messsystem einen elektrischen Energiespeicher (13) aufweist, der bei Ausfall einer externen elektrischen Versorgungsspannung (Uᵥ) des Gebers (14) zumindest ein Teil des Gebers (14) einschließlich der Geberuhr (24) weiter mit elektrischer Energie versorgt, wobei das Messsystem eine Überwachungseinheit (15) aufweist, wobei die Überwachungseinheit (15) nach Wiederherstellung der externen elektrischen Versorgungsspannung (Uᵥ) ein Vergleich der Urzeit der Geberuhr (24) mit einer Uhrzeit einer externen Uhr (25) durchführt und anhand des Vergleichs der Uhrzeiten eine fehlerhaft ermittelte Lage des bewegbaren Elements (20) erkennt.

6. Messsystem nach Anspruch 5, in welchem dass die Überwachungseinheit (15) Bestandteil einer Steuer- und/oder Regeleinrichtung (9) zur Regelung des bewegbaren Elements (20) ist.

7. Messsystem nach Anspruch 5 oder 6, in welchem die externe Uhr (25) Bestandteil einer Steuer- und/oder Regeleinrichtung (9) zur Steuerung und/oder Regelung eines bewegbaren Elements (20) ist.

8. Werkzeugmaschine, Produktionsmaschine und/oder Roboter mit einem Messsystem nach einem der Ansprüche 5 bis 7.

## Claims

1. Method for monitoring a measurement system, wherein the measurement system has a transmitter (14) for determining the position of a movable element (20), **characterized in that** the transmitter (14) has a transmitter clock (24), wherein the measurement system has an electrical energy store (13) which, in the event of failure of an external electrical supply voltage (Uᵥ) of the transmitter (14), keeps supplying at least a part of the transmitter (14), including the transmitter clock (24) with electrical power, wherein, after the external electrical supply voltage (Uᵥ) has been produced again, the clock time of the transmitter clock (24) is compared with a clock time of an external clock (25), and an incorrectly determined position of the movable element (20) is identified on the basis of the comparison of the clock times.

2. Method according to Claim 1, in which the clock times are compared by determining a first difference between the clock time of the transmitter clock (24) and the clock time of the external clock (25) when a reference mark (3) of the transmitter (14) is detected for the first time and, after the external electrical supply voltage (Uᵥ) has been produced again, a second difference is determined between the clock time of the transmitter clock (24) and the clock time of the external clock (25), and the first difference is compared with the second difference.

3. Method according to Claim 2, in which the first difference is compared to the second difference by forming the difference between the first difference and the second difference.

4. Method according to one of the preceding claims, in which, in the event of failure of the external supply voltage (Uᵥ) for the transmitter (14), at least a part of the transmitter (14) is additionally supplied with electrical power from the energy store (13), such that increments which have been moved over are counted.

5. Measurement system wherein the measurement system has a transmitter (14) for determining the position of a movable element (20), **characterized in that** the transmitter (14) has a transmitter clock (24), wherein the measurement system has an electrical energy store (13) which, in the event of failure of an external electrical supply voltage (Uᵥ) of the transmitter (14), keeps supplying at least a part of the transmitter (14), including the transmitter clock (24), with electrical power, wherein the measurement system has a monitoring unit (15), wherein the monitoring unit (15) compares the clock time of the transmitter clock (24) with a clock time of an external clock (25) when the external electrical supply voltage (Uᵥ) is produced again, and identifies an incorrectly determined position of the movable element (20) on the basis of the comparison of the clock times.

6. Measurement system according to Claim 5, in which the monitoring unit (15) is a component of an open-loop and/or closed-loop control device (9) closed-loop control of the movable element (20).

7. Measurement system according to Claim 5 or 6, in which the external clock (25) is a component of an open-loop and/or closed-loop control device (9) for open-loop control and/or closed-loop control of a movable element (20).

8. Machine tool, production machine and/or robot having a measurement system according to one of Claims 5 to 7.

## Revendications

1. Procédé de contrôle d'un système de mesure, dans lequel le système de mesure comporte un capteur ( 14 ) pour la détermination de la position d'un élément ( 20 ) mobile, **caractérisé en ce que** le capteur ( 14 ) a une horloge ( 24 ), le système de mesure ayant un accumulateur ( 13 ) d'énergie électrique, qui, en cas de défaillance d'une tension ( Uᵥ ) d'alimentation électrique extérieure du capteur ( 14 ), continue à alimenter en énergie électrique au moins une partie du capteur, y compris l'horloge ( 24 ), dans lequel, après rétablissement de la tension ( Uᵥ ) d'alimentation électrique extérieure, on effectue une comparaison du temps de l'horloge ( 24 ) à un temps d'une horloge ( 25 ) extérieure et, au moyen de la comparaison des temps d'horloge, on reconnaît une position de l'élément ( 20 ) mobile déterminée de manière erronée.

2. Procédé suivant la revendication 1, dans lequel on effectue la comparaison des temps d'horloge en déterminant une première différence du temps de l'horloge ( 24 ) du capteur et du temps de l'horloge ( 25 ) extérieure lorsque l'on détecte pour la première fois un repère ( 3 ) de référence du capteur ( 4 ) et, après rétablissement de l'alimentation ( Uᵥ ) en tension électrique extérieure, on détermine une deuxième différence entre le temps de l'horloge ( 24 ) du capteur et le temps de l'horloge ( 25 ) extérieure et on compare la première différence à la deuxième différence.

3. Procédé suivant la revendication 2, dans lequel on compare la première différence à la deuxième différence en formant la différence entre la première différence et la deuxième différence.

4. Procédé suivant l'une des revendications précédentes, dans lequel, en cas de défaillance de la tension ( Uᵥ ) d'alimentation extérieure du capteur ( 14 ), on alimente supplémentairement en énergie électrique, au moins une partie du capteur ( 14 ) par l'accumulateur ( 13 ) d'énergie, de manière à compter des incréments franchis.

5. Système de mesure, dans lequel le système de mesure comporte un capteur ( 14 ) de détermination de la position d'un élément ( 20 ) mobile, **caractérisé en ce que** le capteur ( 14 ) a une horloge ( 24 ), le système de mesure ayant un accumulateur ( 13 ) d'énergie électrique, qui, lorsqu'une tension ( Uᵥ ) d'alimentation électrique extérieure du capteur ( 14 ) est défaillante, continue à alimenter en énergie électrique au moins une partie du capteur, y compris l'horloge ( 24 ) du capteur, le système de mesure comportant une unité ( 15 ) de contrôle, l'unité ( 15 ) de contrôle effectuant, après rétablissement de la tension ( Uᵥ ) d'alimentation électrique extérieure, une comparaison du temps de l'horloge ( 24 ) du capteur à un temps d'une horloge ( 25 ) extérieure et reconnaissant, au moyen de la comparaison des temps d'horloge, une position de l'élément mobile déterminée de manière erronée.

6. Système de mesure suivant la revendication 5, dans lequel l'unité ( 15 ) de contrôle fait partie d'un dispositif ( 9 ) de commande et/ou de régulation pour la régulation de l'élément ( 20 ) mobile.

7. Système de mesure suivant la revendication 5 ou 6, dans lequel l'horloge ( 25 ) extérieure fait partie d'un dispositif ( 9 ) de commande et/ou de régulation pour la commande et/ou pour la régulation d'un élément ( 20 ) mobile.

8. Machine-outil, machine de production et/ou robot ayant un système de mesure suivant l'une des revendications 5 à 7.
